# FASCICULE DE BREVET EUROPEEN

(11) **EP 2 595 879 B1**
(45) Date de publication et mention de la délivrance du brevet: **03.09.2014**
(21) Numéro de dépôt: 11741666.9
(22) Date de dépôt: 13.07.2011
(51) Int. Cl.: B64C 5/10

(54) **DISPOSITIF ET PROCÉDÉ DE STABILISATION LATÉRALE D'UN AVION**
VERFAHREN UND VORRICHTUNG ZUR SEITLICHEN STABILISIERUNG EINES FLUGZEUGS
METHOD AND DEVICE FOR THE LATERAL STABILIZATION OF AN AIRCRAFT

(30) Priorité: 20.07.2010 FR 1055895
(43) Date de publication de la demande: 29.05.2013
(73) Titulaire: Airbus Operations SAS, 31060 Toulouse (FR)
(72) Inventeur: GALL, Pierre-Emmanuel, 31200 Toulouse (FR); CROS, Christophe, 31240 L'union (FR); LALLEMAND, Mickaël, 31100 Toulouse (FR)
(74) Mandataire: Gevers France
(86) Numéro de dépôt international: PCT/FR2011/051673
(87) Numéro de publication internationale: WO 2012/017152

(56) Documents cités:
- DE-B- 1 283 097
- DE-C- 748 739
- GB-A- 820 009
- JP-A- 54 059 798

## Description

La présente invention concerne un dispositif et un procédé de stabilisation latérale d'un avion, en particulier d'un avion de transport.

Bien que, non exclusivement, la présente invention s'applique plus particulièrement à un avion utilisant un système propulsif à hélices non carénées pour minimiser la consommation de carburant, dont les moteurs sont installés à l'arrière du fuselage, et qui possède de préférence un empennage en forme de T.

On sait que l'une des solutions propulsives les plus prometteuses pour réduire la consommation de carburant est l'utilisation de moteurs à hélices non carénées, car ces moteurs présentent une consommation réduite de 20% par rapport aux moteurs à architecture conventionnelle. De plus, l'utilisation de doubles hélices contra-rotatives permet d'atteindre des vitesses de croisière importantes pour un encombrement (diamètre) réduit.

De plus, une installation motrice avec de tels moteurs agencés à l'arrière du fuselage présente de nombreux avantages supplémentaires, et notamment :
- une réduction du bruit à l'intérieur de la cabine, seule la partie arrière de la cabine étant affectée par le bruit des moteurs, contrairement à une installation usuelle des moteurs sous la voilure ; et
- la possibilité de prévoir une installation motrice volumineuse, qui serait difficile à intégrer sous une voilure d'avion.

On sait, en outre, que les hélices des moteurs à hélices, installés à l'arrière du fuselage, participent, de plus, à la stabilité longitudinale et latérale de l'avion. En particulier, elles participent à l'amélioration de la stabilité de route, qui qualifie l'amortissement d'un avion vis-à-vis d'un phénomène d'oscillations couplées roulis/dérapage, appelé « roulis hollandais ». En effet, une hélice qui est soumise à un flux d'air en incidence produit une force aérodynamique, tout comme une surface portante telle qu'une voilure ou un empennage. Comme les moteurs sont situés à l'arrière par rapport au centre de gravité de l'avion, les hélices peuvent être assimilées à un empennage, et contribuent donc à stabiliser l'avion sur ses axes longitudinal et latéral.

Il pourrait donc être intéressant d'utiliser cette stabilisation additionnelle pour réduire la surface de l'empennage vertical, et donc la traînée globale de l'avion, ainsi que sa consommation.

Cet effet stabilisant est peu dépendant de la poussée demandée au moteur. Il dépend, en effet, surtout de la vitesse de rotation de l'hélice, qui varie peu dans les différentes phases de vol pour ce type de moteur. Par conséquent, l'effet stabilisant apporté par les hélices est aussi efficace avec une poussée minimale qu'avec une poussée maximale.

Cependant, il convient de tenir compte de la possibilité d'une panne moteur. En effet, en cas de panne d'un moteur, son effet stabilisant est réduit, car la vitesse de rotation des hélices est alors, généralement, de l'ordre de 10% du régime de fonctionnement normal. Dans certains cas (blocage des hélices), la vitesse de rotation peut même être nulle. Aussi, avec une seule panne moteur, le moteur restant en fonctionnement continue à contribuer, au même titre que l'empennage, à la stabilité de l'avion. En revanche, en cas de double panne moteur d'un avion bimoteur, seule subsiste la stabilité intrinsèque de l'avion (à laquelle peut s'ajouter un léger effet stabilisateur des hélices si elles sont en drapeau, qui est toutefois moins important que lors d'un fonctionnement normal).

Or, un niveau suffisant de stabilité de l'avion doit être assurée quel que soit le cas de vol, ce qui signifie qu'a priori, on ne peut profiter pleinement de la stabilisation des hélices pour réduire l'empennage vertical de l'avion.

Par ailleurs, on connaît par le document GB-820 009 un dispositif de stabilisation d'un avion muni d'un empennage horizontal. Ce dispositif comporte un élément de dérive qui est agencé sur l'empennage horizontal et qui peut être amené dans une position déployée dans laquelle il participe à la stabilisation latérale de l'avion.

La présente invention a pour objet de remédier aux inconvénients précités. Elle concerne un procédé pour stabiliser latéralement un avion, en particulier un avion de transport, dans toutes les phases de vol, incluant la croisière à grande vitesse, ledit avion étant muni d'un empennage horizontal comprenant des parties d'empennage agencées de part et d'autre de l'avion, et notamment un avion pourvu d'un système propulsif à hélices non carénées, dont les moteurs sont installés à l'arrière du fuselage, et qui possède, en particulier, un empennage en forme de T.

A cet effet, selon l'invention, ledit dispositif est remarquable en ce qu'il comporte :
- au moins une dérive auxiliaire, qui est associée à l'une desdites parties d'empennage ; et
- des moyens d'actionnement permettant d'amener la dérive auxiliaire :
   - d'une position rétractée inactive, dans laquelle ladite dérive auxiliaire est rétractée par rapport à la partie d'empennage associée de manière à engendrer une traînée limitée ;
   - à une position déployée active, dans laquelle ladite dérive auxiliaire est déployée par rapport à la partie d'empennage associée de manière à engendrer une stabilisation latérale de l'avion.

Dans un mode de réalisation préféré, ledit dispositif comporte au moins deux dérives auxiliaires, dont chacune est associée à l'une desdites parties d'empennage, de préférence de façon symétrique.

Ainsi, grâce à l'invention, on prévoit une ou plusieurs dérives auxiliaires qui génèrent une action de stabilisation latérale, et ceci uniquement lorsqu'elles sont amenées dans une position déployée. Cette position déployée peut être commandée lors de la survenue de conditions particulières telles que des pannes moteur, comme précisé ci-dessous.

En revanche, dans la position rétractée, chaque dérive auxiliaire est rendue solidaire de la partie d'empennage associée, comme précisé ci-dessous, de manière à limiter la traînée aérodynamique produite par la présence de cette dérive auxiliaire, afin de limiter son impact sur les performances de l'avion.

Selon un mode de réalisation préféré, dans la position déployée, chaque dérive auxiliaire est amenée dans un plan sensiblement parallèle à l'écoulement local au niveau de sa position, à savoir dans un plan vertical qui est sensiblement parallèle au plan de symétrie de l'avion.

De plus, de préférence, dans cette position déployée, chaque dérive auxiliaire est reliée à l'extrémité libre de la partie d'empennage associée. Toutefois, il est également envisageable d'écarter la zone de liaison de cette extrémité libre.

Par ailleurs, avantageusement, lesdits moyens d'actionnement comportent, pour chaque dérive auxiliaire, un système de déploiement qui engendre le déplacement de la dérive auxiliaire de la position rétractée à la position déployée.

Dans un premier mode de réalisation préféré, ledit système de déploiement réalise un déplacement par pivotement, et lesdits moyens d'actionnement comprennent, pour chaque dérive auxiliaire, une charnière qui relie la dérive auxiliaire à la partie d'empennage associée et qui permet d'assurer le pivotement de la dérive auxiliaire de la position rétractée à la position déployée. Dans ce cas, ledit système de déploiement peut être formé de manière à engendrer un pivotement vers l'extérieur ou vers l'intérieur de l'avion.

En outre, dans un deuxième mode de réalisation, ledit système de déploiement peut réaliser un déploiement télescopique.

De plus, dans un troisième mode de réalisation, il est envisagé que ledit système de déploiement puisse réaliser un déploiement combinant à la fois une translation et un pivotement.

Par ailleurs, dans un mode de réalisation particulier, lesdits moyens d'actionnement comportent, de plus, pour chaque dérive auxiliaire un système de goupille pour verrouiller la dérive auxiliaire dans la position déployée.

En outre, dans un mode de réalisation particulier, ledit dispositif comprend au moins un moyen d'attache qui permet de maintenir ladite dérive auxiliaire dans ladite position rétractée.

Par ailleurs, avantageusement, chaque dérive auxiliaire comporte des moyens de rigidification qui peuvent comprendre, avantageusement, des moyens pour lester l'extrémité libre de la dérive auxiliaire et/ou une contre-fiche déployable, dont une extrémité est fixée à la dérive auxiliaire et dont l'autre extrémité est fixée à la partie d'empennage associée. Cette rigidification est nécessaire à l'utilisation du dispositif en vol de croisière.

En outre, de façon avantageuse, ledit dispositif comporte, de plus, un système de joint pour assurer l'étanchéité de l'ensemble formé de chaque dérive auxiliaire et de la partie d'empennage associée, dans la position rétractée de ladite dérive auxiliaire. Ce système de joint permet de limiter (voire de rendre négligeable) la dégradation des performances à grande vitesse.

Dans un mode de réalisation préféré, chaque dérive auxiliaire est logée, dans la position rétractée, à l'intérieur du caisson de la partie d'empennage associée, de manière à obtenir un profil d'ensemble qui permet d'assurer une efficacité maximale de l'empennage horizontal dans cette position, notamment en limitant la traînée aérodynamique.

En outre, dans un mode de réalisation préféré, chaque dérive auxiliaire est déployée vers le bas de la partie d'empennage associée. Toutefois, il est également envisageable de déployer chaque dérive auxiliaire vers le haut. En outre, dans un mode de réalisation particulier, ledit dispositif peut comporter au moins une dérive qui, dans la position déployée, est déployée vers le haut de la partie d'empennage associée, ainsi qu'au moins une dérive qui, dans la position déployée, est déployée vers le bas de la partie d'empennage associée.

La présente invention concerne également un procédé de stabilisation latérale d'un avion, en particulier d'un avion de transport, qui est muni d'un empennage horizontal comprenant des parties d'empennage agencées de part et d'autre de l'avion.

Selon l'invention, ce procédé est remarquable en ce que l'on surveille l'avion de manière à pouvoir détecter des conditions d'activation d'une stabilisation latérale, et en ce que, lors de la détection desdites conditions d'activation, on amène au moins une dérive auxiliaire, qui est associée à l'une desdites parties d'empennage :
- d'une position rétractée inactive, dans laquelle ladite dérive auxiliaire est rétractée par rapport à la partie d'empennage associée de manière à engendrer une traînée limitée ;
- à une position déployée active, dans laquelle ladite dérive auxiliaire est déployée par rapport à la partie d'empennage associée de manière à engendrer une stabilisation latérale de l'avion.

Dans un mode de réalisation préféré, lors de la détection desdites conditions d'activation, on amène au moins deux dérives auxiliaires, dont chacune est associée à l'une desdites parties d'empennage, dans la position déployée, de préférence de façon symétrique. Ceci permet d'assurer la symétrie de l'avion, et d'augmenter la surface stabilisatrice globale déployée et ainsi l'efficacité dudit dispositif.

La présente invention est appliquée, de préférence, à un avion comprenant deux moteurs à hélices non carénées pour minimiser la consommation de kérosène, dont les moteurs sont installés à l'arrière du fuselage, et qui possède, par exemple, un empennage en forme de T. Dans cette application préférée, les conditions d'activation de la stabilisation correspondent à des pannes simultanées desdits moteurs de l'avion.

Les dérives auxiliaires qui ainsi sont déployées uniquement en cas de panne moteur permettent, notamment, de prévoir une surface d'empennage vertical réduite dans une très large majorité des vols, et donc de réduire la traînée et, par conséquent, la consommation de l'avion. Les dérives auxiliaires sont déployées en cas de pannes moteur pour compenser le déficit de stabilité dû auxdites pannes.

Les caractéristiques du dispositif de stabilisation, en termes d'occurrence et de performance, sont donc peu contraignantes :
- une vitesse de déploiement réduite, étant donné la période d'oscillation du mode «roulis hollandais» de l'ordre de 30s ; et
- une absence de rétractation en vol après utilisation. La reconfiguration de l'empennage vertical pour l'utilisation nominale sera faite par maintenance au sol. Ceci n'implique pas de surcoût pour l'exploitation de l'avion, car l'occurrence d'utilisation du dispositif de stabilisation conforme à l'invention est très faible, et ce dispositif intervient dans le cas d'une panne des moteurs qui engendre de toute manière une opération d'analyse et de maintenance de l'avion assez lourde, et donc son immobilisation.

En outre, le dispositif conforme à l'invention doit pouvoir être déployé à grande vitesse (c'est-à-dire à la vitesse de croisière de l'avion).

La présente invention concerne également un aéronef, en particulier un avion de transport, qui est pourvu d'un dispositif tel que celui précité.

Les figures du dessin annexé feront bien comprendre comment l'invention peut être réalisée. Sur ces figures, des références identiques désignent des éléments semblables.
Les figures 1A, 1B, 1C, et 1D sont des vues schématiques en perspective d'un empennage horizontal muni de dérives auxiliaires conformes à l'invention, dont une seule est représentée, dans quatre situations successives entre une position rétractée et une position déployée.
La figure 2 montre schématiquement une partie d'empennage munie d'une dérive auxiliaire dans une position rétractée.
Les figures 3A et 3B montrent schématiquement un exemple de verrouillage d'une dérive auxiliaire dans la position déployée.
Les figures 4A, 4B et 4C sont des vues de dessous, schématiques et en perspective, d'une partie d'empennage horizontal munie d'une dérive auxiliaire conforme à l'invention, dans trois situations successives entre une position rétractée et une position déployée.
La figure 5 est une vue de dessous, schématique et en perspective, d'une partie d'empennage horizontal munie d'une dérive auxiliaire qui se trouve dans une position déployée.

Le dispositif 1 conforme à l'invention et représenté sur les figures est destiné à stabiliser latéralement un avion, en particulier un avion de transport, lors de l'existence de conditions particulières précisées ci-dessous. Ce dispositif 1 est appliqué à un avion qui est muni d'un empennage horizontal 2 comprenant des parties d'empennage 3A et 3B agencées de part et d'autre de l'axe longitudinal de l'avion, et de préférence à un avion pourvu d'un système propulsif à hélices non carénées, dont les moteurs sont installés à l'arrière du fuselage.

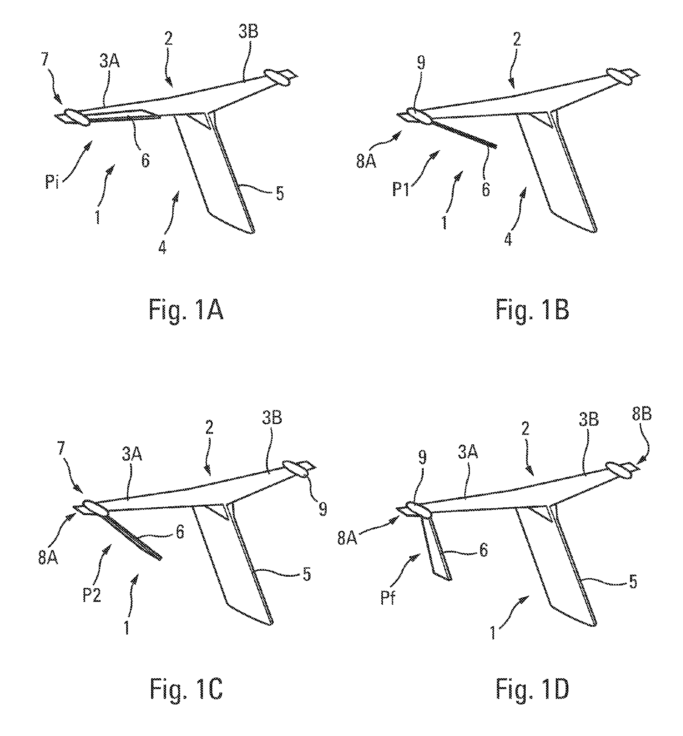

Dans l'exemple représenté sur les figures 1A à 1D notamment, ledit dispositif 1 est appliqué à un empennage 4 en forme de T, comprenant de façon usuelle un empennage vertical 5 (pourvu d'une dérive), au sommet duquel est agencé l'empennage horizontal 2.

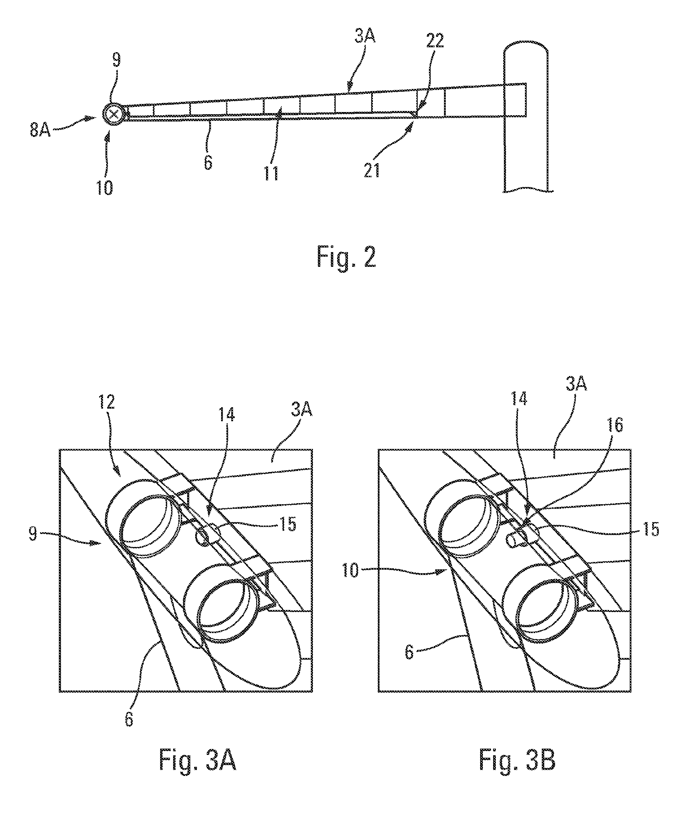

Selon l'invention, ledit dispositif 1 comporte :
- au moins une mais de préférence (au moins) deux dérives auxiliaires 6 longitudinales, de forme générale plane, dont chacune est associée à l'une desdites parties d'empennage 3A et 3B. Pour des raisons de simplification du dessin, on a représenté une seule dérive auxiliaire 6 (associée à la partie d'empennage 3A) sur les figures 1A à 1D, alors que chaque partie d'empennage 3A, 3B est munie de préférence d'une telle dérive auxiliaire 6 ; et
- des moyens d'actionnement 7 permettant d'amener chacune desdites dérives auxiliaires 6 :
   - d'une position rétractée inactive Pi, représentée sur la figure 1A, dans laquelle ladite dérive auxiliaire 6 est solidaire longitudinalement de la partie d'empennage 3A, 3B associée, de manière à former un profil d'ensemble qui permet d'assurer une efficacité maximale de l'empennage horizontal 2 dans cette position rétractée, en limitant notamment la traînée, comme précisé ci-dessous en référence à la figure 2. La dérive auxiliaire 6 n'engendre aucun effet de stabilisation latérale et est donc inactive (concernant la stabilisation) dans cette position rétractée Pi ;
   - à une position déployée active Pf, représentée sur la figure 1D, dans laquelle ladite dérive auxiliaire 6 est fixée sensiblement perpendiculairement à la partie d'empennage associée 3A, 3B (et sensiblement parallèlement à l'empennage vertical 5 pourvu de la dérive) de manière à engendrer une stabilisation latérale de l'avion, comme le fait la dérive. Dans cette position déployée Pf, la dérive auxiliaire 6, sensiblement plane, est donc orientée parallèlement à un plan vertical de symétrie de l'avion, en étant décalée latéralement de l'axe longitudinal. La dérive auxiliaire 6 se trouve ainsi dans un plan qui est sensiblement parallèle à l'écoulement local.

Sur les figures 1B et 1C, on a représenté des positions intermédiaires P1 et P2, entre la position rétractée Pi et la position déployée Pf, pour bien mettre en évidence le déploiement (par pivotement, comme précisé ci-dessous) de la dérive auxiliaire 6.

Ainsi, le dispositif de stabilisation 1 conforme à l'invention comprend des dérives auxiliaires 6 qui génèrent une action de stabilisation latérale, et ceci uniquement lorsqu'elles sont amenées dans une position déployée Pf, à savoir lors l'apparition de conditions particulières telles que des pannes moteur, comme précisé ci-dessous.

En revanche, dans la position rétractée Pi, chaque dérive auxiliaire 6 est rendue solidaire de la partie d'empennage 3A, 3B associée, comme précisé ci-dessous, de manière à limiter la traînée aérodynamique produite par la présence de cette dérive auxiliaire 6, afin de limiter son impact sur les performances de l'avion.

En outre, selon l'invention, les dérives auxiliaires 6 sont formées de manière à pouvoir être déployées à grande vitesse (c'est-à-dire à la vitesse de croisière de l'avion).

Dans le cadre de la présente invention, les dérives auxiliaires 6 peuvent également être amenées dans des positions déployées, pour lesquelles elles ne sont pas perpendiculaires à la partie d'empennage 3A, 3B associée, par exemple dans une position telle que la position P2 de la figure 1C.

Selon un mode de réalisation préféré, dans la position déployée Pf, chaque dérive auxiliaire 6 est fixée (sensiblement perpendiculairement) à l'extrémité libre 8A, 8B de la partie d'empennage 3A, 3B associée. La dérive auxiliaire 6 peut pivoter ainsi autour d'un axe situé en extrémité d'empennage. Dans ce cas, de préférence, le carénage 9 des moyens de pivotement constitue le saumon de la partie d'empennage 3A, 3B associée.

Toutefois, même si l'efficacité de la dérive auxiliaire 6 dans la position déployée Pf est alors réduite, il est également envisageable d'écarter la zone de liaison (entre la dérive auxiliaire 6 et la partie d'empennage 3A, 3B associée) de cette extrémité libre 8A, 8B, et de la prévoir entre cette extrémité libre 8A, 8B et la jonction avec l'empennage vertical 5, mais bien entendu le plus près possible de l'extrémité libre 8A, 8B.

Lesdits moyens d'actionnement 7 comportent donc, pour chaque dérive auxiliaire 6, une articulation 10 reliant la dérive auxiliaire 6 à la partie d'empennage associée 3A, 3B et permettant d'assurer le pivotement de la dérive auxiliaire 6 de la position rétractée Pi à la position déployée Pf. Cette articulation 10 peut être une simple charnière noyée dans le saumon de l'empennage. Dans ce cas, il n'est pas nécessaire de caréner la charnière : il suffit d'un ajustement correct et les effets sur la traînée sont insignifiants en raison de la position de cet élément.

Lesdits moyens d'actionnement 7 comportent, de plus, un moyen d'attache (non représenté), par exemple un crochet, et notamment un crochet de même type que pour un train d'atterrissage, qui est destiné à maintenir ladite dérive auxiliaire 6 dans ladite position rétractée Pi.

En outre, lesdits moyens d'actionnement 7 comportent également, pour chaque dérive auxiliaire 6, un système de déploiement 12 qui engendre le mouvement de pivotement de la dérive auxiliaire 6 de la position rétractée Pi à la position déployée Pf, c'est-à-dire de l'intérieur vers l'extérieur par rapport à l'avion. Un pivotement dans l'autre sens (de l'extérieur vers l'intérieur) est également envisageable.

Ledit système de déploiement 12 peut être agencé à l'intérieur de la charnière 10, et peut être constitué, notamment :
- d'un actionneur électrique ou hydraulique axial usuel ; ou
- conformément à un mode de réalisation préféré, d'un ressort axial.

L'actionneur (électrique, hydraulique ou ressort) qui est logé dans la partie amont du saumon et de la charnière peut être activé par réception d'une information de mise en action, qui peut être transmise par une liaison électrique prévue dans le bord d'attaque de l'empennage.

Dans un mode de réalisation particulier (non représenté), ledit système de déploiement peut être formé de manière à réaliser un déploiement télescopique et/ou un déploiement combinant à la fois une translation et un pivotement.

Etant donné la faible épaisseur de la dérive auxiliaire 6, et son utilisation à des vitesses élevées, le critère de dimensionnement structural est le flottement (« flutter » en anglais), qui est un phénomène oscillatoire lié au couplage des sollicitations aérodynamiques et de la réponse structurale. Ce phénomène est presque toujours divergent, et entraîne la rupture de la structure d'une surface portante par dépassement des limites structurales du matériau. Une structure suffisamment rigide n'entre pas en résonance avec l'écoulement aérodynamique, et est ainsi insensible au phénomène de flottement.

Aussi, chaque dérive auxiliaire 6 comporte des moyens de rigidification 13 pour rigidifier la structure lors du déploiement. A cet effet, on peut prévoir deux solutions différentes, à savoir :
- une première solution sans renforts longitudinaux ; et
- une seconde solution préférée avec une contre-fiche.

Concernant la première solution de rigidification, il existe deux façons de contrer le phénomène de flottement :
- assurer une rigidité suffisante de la dérive auxiliaire 6, soit en la réalisant de façon suffisamment épaisse, soit en accroissant l'épaisseur des peaux ; et
- lester l'extrémité de la dérive auxiliaire 6. Cette solution offre de plus l'avantage d'aider au déploiement, par gravité.

Le verrouillage en position déployée Pf peut être réalisé par un système de goupille 14. Ce système de goupille 14 comprend, de préférence, au moins un goupille 15 contrainte par un ressort qui est solidaire de la dérive auxiliaire 6 et qui vient coopérer avec une cavité de verrouillage 16 prévue au niveau de la charnière 10, comme représenté sur les figures 3A et 3B. Plus précisément :
- sur l'exemple de la figure 3A, la dérive auxiliaire 6 est en cours de déploiement et la goupille 15 n'est pas engagée dans la cavité de verrouillage 16 ; alors que
- sur l'exemple de la figure 3B, la goupille 15 est engagée dans la cavité de verrouillage 16 et le verrouillage est réalisé (dans la position déployée Pf).

Ce système de goupille 14 est simple et fiable (il peut être facilement redondant), dans la mesure où la dérive auxiliaire 6 n'a pas besoin d'être repliée avant d'être au sol.

Concernant ladite seconde solution (préférée), l'utilisation d'une contre-fiche 17 est plus intéressante d'un point de vue masse. La contre-fiche 17 déployable est fixée par une extrémité 18 à la dérive auxiliaire 6 et par l'autre extrémité 19 à la partie d'empennage associée 3A, 3B.

Cette solution permet également d'assurer le verrouillage ouvert par un léger contre-angle de la contre-fiche secondée par un ou plusieurs ressorts. Bien entendu un système de goupille 14 tel que précité peut également être associé à cette solution.

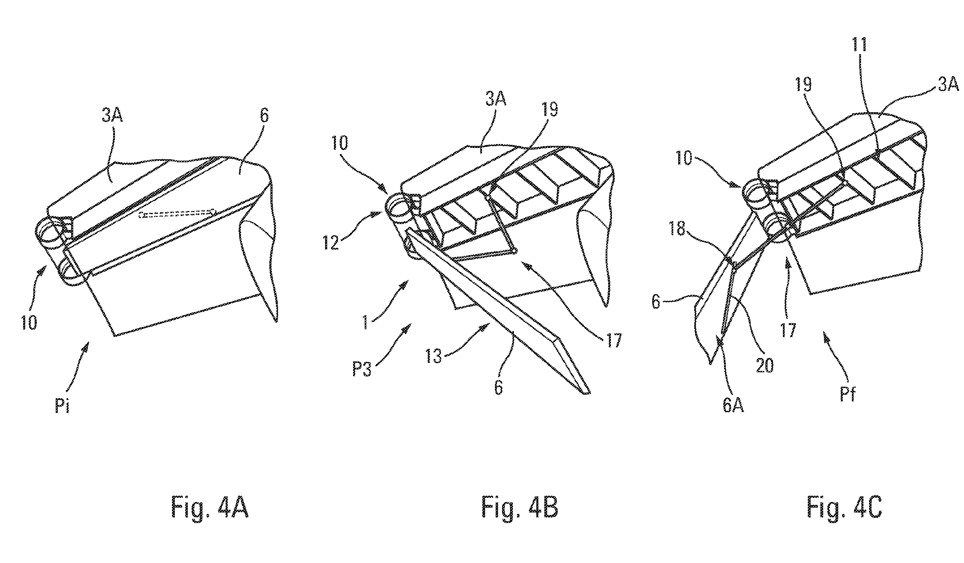

Les figures 4A, 4B et 4C montrent respectivement trois positions successives lors d'un déploiement avec cette seconde solution, à savoir la position rétractée Pi, une position intermédiaire P3 et la position déployée Pf. Sur la figure 4C, on voit la cavité de logement 20 de la contre-fiche 17 qui est pratiquée dans la face interne 6A de la dérive auxiliaire 6.

En outre, chaque dérive auxiliaire 6 est logée, dans la position rétractée, à l'intérieur d'un caisson 11 de la partie d'empennage 3A, 3B associée, de manière à former un profil d'ensemble qui permet d'assurer une efficacité maximale de l'empennage horizontal 2 dans cette position rétractée, comme représenté sur la figure 2.

Le dispositif 1 comporte, de plus, pour chaque dérive auxiliaire 6, un système de joint 21 permettant d'assurer l'étanchéité de l'ensemble formé de cette dérive auxiliaire 6 et de la partie d'empennage 3A, 3B associée, dans la position rétractée de ladite dérive auxiliaire 6. Des joints 22 sont prévus, de préférence, à la jonction entre la surface inférieure de l'empennage proche de son longeron avant et le bord d'attaque de la dérive auxiliaire 6, entre le bord de fuite de cette dérive auxiliaire 6 et la surface inférieure de l'empennage proche de son longeron arrière, et entre l'extrémité de la dérive auxiliaire 6 et la partie interne de l'empennage (proche de son emplanture).

Par ailleurs, comme le dispositif de stabilisation 1 conforme à l'invention est d'une utilisation unique, la lubrification peut être assurée par un système sec, de type téflon, de manière à ne pas nécessiter de maintenance.

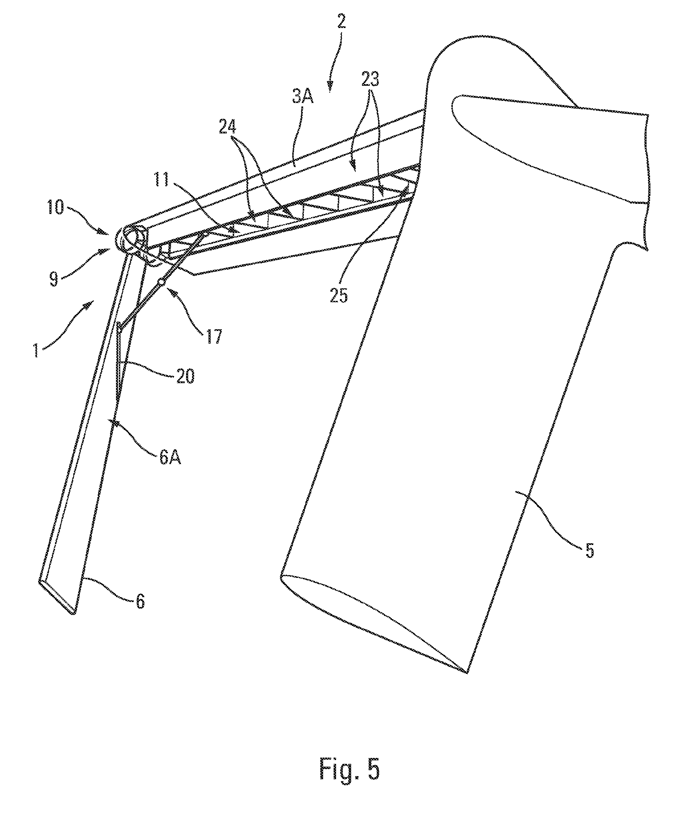

Par ailleurs, sur l'exemple préféré de la figure 5, on a représenté notamment :
- la charnière 10 de saumon avec la goupille, entourée par un carénage aérodynamique 9;
- la contre-fiche 17 en position déployée ;
- la cavité 20 de logement de la contre-fiche 17 qui est prévue dans la dérive auxiliaire 6 ;
- les longerons 23 du caisson 11 de la partie 3A d'empennage de l'empennage horizontal 2 ;
- les nervures 24 dudit caisson 11 ; et
- l'emplacement 25 du crochet de maintien de la dérive auxiliaire 6 en position rétractée.

Par ailleurs, pour la mise en oeuvre de la présente invention, on peut renforcer la structure nervurée de type classique de la partie d'empennage 3A, 3B. En particulier, on peut renforcer :
- une nervure de la partie interne de l'empennage qui reçoit un crochet de maintien replié de la dérive auxiliaire ;
- une nervure qui sert de fixation à la contre-fiche 17, cette attache pouvant également être fixée au longeron avant ; et
- la nervure externe fermant le caisson d'empennage, sur laquelle sont fixés les stators de la charnière 10 par éclissage.

La présente invention est appliquée, de préférence, à un avion comprenant deux moteurs à hélices non carénées, dont les moteurs sont installés à l'arrière du fuselage, et qui possède, par exemple, un empennage en forme de T, tel que représenté sur les figures 1A à 1D par exemple.

Dans cette application préférée, la stabilité intrinsèque de l'avion bimoteur étant suffisante en cas de simple panne moteur, le déploiement des dérives auxiliaires 6 n'est réalisé qu'en cas de double panne moteur, dont la probabilité d'occurrence est extrêmement faible (de l'ordre de 10-8). Dans ce cas, le dispositif 1 est également muni de moyens (non représentés) qui surveillent les moteurs de l'avion et qui sont en mesure de détecter une telle double panne.

Les caractéristiques du dispositif de stabilisation 1, en termes d'occurrence et de performance, sont donc peu contraignantes :
- une vitesse de déploiement réduite, étant donné la période d'oscillation du mode «roulis hollandais» de l'ordre de 30s ; et
- une absence de rétractation en vol après utilisation. La reconfiguration de l'empennage vertical 5 pour l'utilisation nominale sera faite par maintenance au sol. Ceci n'implique pas de surcoût pour l'exploitation de l'avion, car l'occurrence d'utilisation du dispositif de stabilisation 1 conforme à l'invention est très faible, et ce dispositif 1 intervient dans le cas d'une panne des moteurs qui engendre de toute manière une opération d'analyse et de maintenance de l'avion assez lourde, et donc son immobilisation.

## Revendications

1. Dispositif de stabilisation latérale d'un avion muni d'un empennage horizontal (2) comprenant des parties d'empennage (3A, 3B) agencées de part et d'autre de l'avion, ledit dispositif (1) comportant :
- au moins une dérive auxiliaire (6), qui est associée à l'une desdites parties d'empennage (3A, 3B) ; et
- des moyens d'actionnement (7) permettant d'amener ladite dérive auxiliaire (6) :
- d'une première position (Pi) ;
- à une position seconde déployée active (Pf), dans laquelle ladite dérive auxiliaire (6) est déployée par rapport à la partie d'empennage (3A, 3B) associée de manière à engendrer une stabilisation latérale de l'avion,
**caractérisé en ce que**, dans ladite première position (Pi) qui est inactive, ladite dérive auxiliaire (6) est rétractée par rapport à la partie d'empennage (3A, 3B) associée de manière à engendrer une traînée limitée, et **en ce que** chaque dérive auxiliaire (6) est pourvue de moyens de rigidification (13).

2. Dispositif selon la revendication 1,
**caractérisé en ce qu'**il comporte au moins deux dérives auxiliaires (6), dont chacune est associée à l'une desdites parties d'empennage (3A, 3B).

3. Dispositif selon l'une des revendications 1 et 2,
**caractérisé en ce que**, dans la position déployée (Pf), chaque dérive auxiliaire (6) est amenée dans un plan sensiblement parallèle à l'écoulement local correspondant.

4. Dispositif selon l'une des revendications 1 à 3,
**caractérisé en ce que** lesdits moyens d'actionnement (7) comportent, pour chaque dérive auxiliaire (6), un système de déploiement (12) qui engendre le déplacement de la dérive auxiliaire (6) de la position rétractée (Pi) à la position déployée (Pf).

5. Dispositif selon la revendication 4,
**caractérisé en ce que** ledit système de déploiement (12) réalise un déplacement par pivotement, et **en ce que** lesdits moyens d'actionnement (7) comprennent, pour chaque dérive auxiliaire (6), une charnière (10) qui relie la dérive auxiliaire (6) à la partie d'empennage (3A, 3B) associée et qui permet d'assurer le pivotement de la dérive auxiliaire (6) de la position rétractée (Pi) à la position déployée (Pf).

6. Dispositif selon la revendication 5,
**caractérisé en ce que** ledit système de déploiement (12) engendre un pivotement vers l'extérieur de l'avion.

7. Dispositif selon la revendication 5,
**caractérisé en ce que** ledit système de déploiement (12) engendre un pivotement vers l'intérieur de l'avion.

8. Dispositif selon la revendication 4,
**caractérisé en ce que** ledit système de déploiement réalise un déploiement télescopique.

9. Dispositif selon la revendication 4,
**caractérisé en ce que** ledit système de déploiement réalise un déploiement à la fois par translation et par pivotement.

10. Dispositif selon l'une quelconque des revendications précédentes,
**caractérisé en ce que** lesdits moyens d'actionnement (7) comportent, de plus, pour chaque dérive auxiliaire (6), un système de goupille (14) pour verrouiller la dérive auxiliaire (6) dans la position déployée (Pf).

11. Dispositif selon l'une quelconque des revendications précédentes,
**caractérisé en ce qu'**il comporte, de plus, au moins un moyen d'attache qui permet de maintenir ladite dérive auxiliaire (6) dans ladite position rétractée (Pi).

12. Dispositif selon l'une quelconque des revendications 1 à 11,
**caractérisé en ce que** lesdits moyens de rigidification comprennent des moyens pour lester l'extrémité libre de la dérive auxiliaire (6).

13. Dispositif selon l'une quelconque des revendications 1 à 11,
**caractérisé en ce que** lesdits moyens de rigidification comprennent une contre-fiche déployable (17), dont une extrémité (18) est fixée à la dérive auxiliaire (6) et dont l'autre extrémité (19) est fixée à la partie d'empennage (3A, 3B) associée.

14. Dispositif selon l'une quelconque des revendications précédentes,
**caractérisé en ce qu'**il comporte, de plus, pour chaque dérive auxiliaire (6), un système de joint (21) permettant d'assurer l'étanchéité de l'ensemble formé de cette dérive auxiliaire (6) et de la partie d'empennage (3A, 3B) associée, dans la position rétractée (Pi) de ladite dérive auxiliaire (6).

15. Dispositif selon l'une quelconque des revendications précédentes,
**caractérisé en ce que**, dans la position rétractée (Pi), chaque dérive auxiliaire (6) est logée dans un caisson (11) de la partie d'empennage (3A, 3B) associée.

16. Dispositif selon l'une quelconque des revendications 1 à 15,
**caractérisé en ce que**, dans la position déployée (Pf), chaque dérive auxiliaire (6) est déployée vers le bas de la partie d'empennage (3A, 3B) associée.

17. Dispositif selon l'une quelconque des revendications 1 à 15,
**caractérisé en ce que**, dans la position déployée, chaque dérive auxiliaire est déployée vers le haut de la partie d'empennage associée.

18. Dispositif selon l'une quelconque des revendications 1 à 15,
**caractérisé en ce qu'**il comporte au moins une dérive qui, dans la position déployée, est déployée vers le haut de la partie d'empennage associée et au moins une dérive qui, dans la position déployée, est déployée vers le bas de la partie d'empennage associée.

19. Procédé de stabilisation latérale d'un avion muni d'un empennage horizontal (2) comprenant des parties d'empennage (3A, 3B) agencées de part et d'autre de l'avion, procédé selon lequel on surveille l'avion de manière à pouvoir détecter des conditions d'activation d'une stabilisation latérale, et lors de la détection desdites conditions d'activation, on amène au moins une dérive auxiliaire (6) pourvue de moyens de rigidification (13), qui est associée à l'une desdites parties d'empennage (3A, 3B) :
- d'une position rétractée inactive (Pi), dans laquelle ladite dérive auxiliaire (6) est rétractée par rapport à la partie d'empennage (3A, 3B) associée de manière à engendrer une traînée limitée ;
- à une position déployée active (Pf), dans laquelle ladite dérive auxiliaire (6) est déployée par rapport à la partie d'empennage (3A, 3B) associée de manière à engendrer une stabilisation latérale de l'avion.

20. Procédé selon la revendication 19,
**caractérisé en ce que**, lors de la détection desdites conditions d'activation, on amène au moins deux dérives auxiliaires (6), dont chacune est associée à l'une desdites parties d'empennage (3A, 3B), dans la position déployée (Pf).

21. Procédé selon l'une des revendications 19 et 20, pour stabiliser latéralement un avion comprenant deux moteurs à hélices agencés à l'arrière dudit avion,
**caractérisé en ce que** l'on surveille lesdits moteurs, et **en ce que** les conditions d'activation de la stabilisation correspondent à des pannes simultanées desdits moteurs.

## Patentansprüche

1. Vorrichtung zur seitlichen Stabilisierung eines Flugzeugs, das mit einem horizontalen Leitwerk (2) versehen ist, das Leitwerkteile (3A, 3B) aufweist, die zu beiden Seiten des Flugzeugs angeordnet sind, wobei die Vorrichtung (1) Folgendes aufweist:
- mindestens eine Hilfsstabilisierungsflosse (6), die mit einem der Leitwerkteile (3A, 3B) verbunden ist, und
- Betätigungsmittel (7), die es erlauben, diese Stabilisierungsflosse (6):
von einer ersten Position (Pi),
zu einer zweiten ausgefahrenen aktiven Position (Pf) zu bringen, in der die Hilfsstabilisierungsflosse (6) in Bezug auf den zugehörigen Leitwerkteil (3A, 3B) derart ausgefahren ist, dass eine seitliche Stabilisierung des Flugzeugs bewirkt wird,
**dadurch gekennzeichnet, dass** die Hilfsstabilisierungsflosse (6) in der ersten Position (Pi), die inaktiv ist, in Bezug auf den zugehörigen Leitwerkteil (3A, 3B) derart eingefahren ist, dass ein beschränkter Stirnwiderstand bewirkt wird, und dass jede Hilfsstabilisierungsflosse (6) mit Versteifungsmitteln (13) versehen ist.

2. Vorrichtung nach Anspruch 1, **dadurch gekennzeichnet, dass** sie mindestens zwei Hilfsstabilisierungsflossen (6) aufweist, die jeweils einem der Leitwerkteile (3A, 3B) zugewiesen sind.

3. Vorrichtung nach einem der Ansprüche 1 und 2, **dadurch gekennzeichnet, dass** jede Hilfsstabilisierungsflosse (6) in der ausgefahrenen Position (Pf) in eine im Wesentlichen zu der entsprechenden lokalen Strömung parallele Ebene gebracht wird.

4. Vorrichtung nach einem der Ansprüche 1 bis 3, **dadurch gekennzeichnet, dass** die Betätigungsmittel (7) für jede Hilfsstabilisierungsflosse (6) ein Ausfahrsystem (12) aufweisen, das die Bewegung der Hilfsstabilisierungsflosse (6) von der eingefahrenen Position (Pi) zu der ausgefahrenen Position (Pf) bewirkt.

5. Vorrichtung nach Anspruch 4, **dadurch gekennzeichnet, dass** das Ausfahrsystem (12) eine Bewegung durch Schwenken ausführt, und dass die Betätigungsmittel (7) für jede Hilfsstabilisierungsflosse (6) ein Scharnier (10) aufweisen, das die Hilfsstabilisierungsflosse (6) mit dem zugehörigen Leitwerkteil (3A, 3B) verbindet und es erlaubt, das Schwenken der Hilfsstabilisierungsflosse (6) von der eingefahrenen Position (Pi) zu der ausgefahrenen Position (Pf) sicherzustellen.

6. Vorrichtung nach Anspruch 5, **dadurch gekennzeichnet, dass** das Ausfahrsystem (12) ein Schwenken zur Außenseite des Flugzeugs bewirkt.

7. Vorrichtung nach Anspruch 5, **dadurch gekennzeichnet, dass** das Ausfahrsystem (12) ein Schwenken zum Inneren des Flugzeugs bewirkt.

8. Vorrichtung nach Anspruch 4, **dadurch gekennzeichnet, dass** das Ausfahrsystem ein teleskopisches Ausfahren ausführt.

9. Vorrichtung nach Anspruch 4, **dadurch gekennzeichnet, dass** das Ausfahrsystem ein Ausfahren sowohl durch Verschiebung als auch durch Schwenken ausführt.

10. Vorrichtung nach einem der vorhergehenden Ansprüche, **dadurch gekennzeichnet, dass** die Betätigungsmittel (7) außerdem für jede Hilfsstabilisierungsflosse (6) ein Stiftsystem (14) aufweisen, um die Hilfsstabilisierungsflosse (6) in der ausgefahrenen Position (Pf) zu verriegeln.

11. Vorrichtung nach einem der vorhergehenden Ansprüche, **dadurch gekennzeichnet, dass** sie außerdem mindestens ein Befestigungsmittel aufweist, das es erlaubt, die Hilfsstabilisierungsflosse (6) in der eingefahrenen Position (Pi) zu halten.

12. Vorrichtung nach einem der Ansprüche 1 bis 11, **dadurch gekennzeichnet, dass** die Versteifungsmittel Mittel zum Beschweren des freien Endes der Hilfsstabilisierungsflosse (6) aufweisen.

13. Vorrichtung nach einem der Ansprüche 1 bis 11, **dadurch gekennzeichnet, dass** die Versteifungsmittel eine ausfahrbare Gegenstrebe (17) aufweisen, von der ein Ende (18) an der Hilfsstabilisierungsflosse (6) befestigt ist, und von der das andere Ende (19) an dem zugehörigen Leitwerkteil (3A, 3B) befestigt ist.

14. Vorrichtung nach einem der vorhergehenden Ansprüche, **dadurch gekennzeichnet, dass** sie außerdem für jede Hilfsstabilisierungsflosse (6) ein Dichtungssystem (21) aufweist, das es erlaubt, die Abdichtung der aus dieser Hilfsstabilisierungsflosse (6) und dem zugehörigen Leitwerkteil (3A, 3B) gebildete Einheit in der eingezogenen Position (Pi) der Hilfsstabilisierungsflosse (6) sicherzustellen.

15. Vorrichtung nach einem der vorhergehenden Ansprüche, **dadurch gekennzeichnet, dass** jede Hilfsstabilisierungsflosse (6) in der eingefahrenen Position (Pi) in einem Kasten (11) des zugehörigen Leitwerkteils (3A, 3B) aufgenommen ist.

16. Vorrichtung nach einem der Ansprüche 1 bis 15, **dadurch gekennzeichnet, dass** jede Hilfsstabilisierungsflosse (6) in der ausgefahrenen Position (Pf) zur Unterseite des zugehörigen Leitwerkteils (3A, 3B) ausgefahren ist.

17. Vorrichtung nach einem der Ansprüche 1 bis 15, **dadurch gekennzeichnet, dass** jede Hilfsstabilisierungsflosse in der ausgefahrenen Position zur Oberseite des zugehörigen Leitwerkteils ausgefahren ist.

18. Vorrichtung nach einem der Ansprüche 1 bis 15, **dadurch gekennzeichnet, dass** sie mindestens eine Stabilisierungsflosse aufweist, die in der ausgefahrenen Position zur Oberseite des zugehörigen Leitwerkteils ausgefahren ist, und mindestens eine Stabilisierungsflosse, die in der ausgefahrenen Position zu der Unterseite des zugehörigen Leitwerkteils ausgefahren ist.

19. Verfahren zur seitlichen Stabilisierung eines Flugzeugs, das mit einem horizontalen Leitwerk (2) versehen ist, das Leitwerkteile (3A, 3B) aufweist, die auf jeder Seite des Flugzeugs angeordnet sind, Verfahren gemäß dem man das Flugzeug derart überwacht, dass man Aktivierungsbedingungen einer seitlichen Stabilisierung erfassen kann, und man bei der Erfassung der Aktivierungsbedingungen mindestens eine Hilfsstabilisierungsflosse (6), die mit Versteifungsmitteln (13) versehen ist, die zu einem der Leitwerkteile (3A, 3B) gehört,
- von einer inaktiven eingefahrenen Position (Pi), in der die Hilfsstabilisierungsflosse (6) in Bezug auf den zugehörigen Leitwerkteil (3A, 3B) eingefahren ist, so dass ein beschränkter Stirnwiderstand bewirkt wird,
- zu einer ausgefahrenen aktiven Position (Pf) bringt, in der die Hilfsstabilisierungsflosse (6) in Bezug auf den zugehörigen Leitwerkteil (3A, 3B) derart ausgefahren wird, dass eine seitliche Stabilisierung des Flugzeugs bewirkt wird.

20. Verfahren nach Anspruch 19, **dadurch gekennzeichnet, dass** man bei der Erfassung der Aktivierungsbedingungen mindestens zwei Hilfsstabilisierungsflossen (6), die jeweils zu einem der Leitwerkteile (3A, 3B) gehören, in die ausgefahrene Position (Pf) bringt.

21. Verfahren nach einem der Ansprüche 19 und 20, zum seitlichen Stabilisieren eines Flugzeugs, das zwei Schraubenmotoren, die an der Rückseite des Flugzeugs angeordnet sind, aufweist, **dadurch gekennzeichnet, dass** man die Motoren überwacht, und dass die Aktivierungsbedingungen der Stabilisierung gleichzeitigen Pannen der Motoren entsprechen.

## Claims

1. A device for laterally stabilizing an airplane fitted with a horizontal tail (2) comprising tail parts (3A, 3B) arranged on either side of the airplane, said device (1) comprising:
- at least one auxiliary stabilizer (6), which is associated with one of said tail parts (3A, 3B); and
- actuating means (7) allowing said auxiliary stabilizer (6) to be brought:
- from a first position (Pi);
- into an active deployed second position (Pf), in which said auxiliary stabilizer (6) is deployed with respect to the associated tail part (3A, 3B) in such a way as to have a lateral stabilizing effect on the airplane,
**characterized in that**, in said first position (Pi) which is inactive, said auxiliary stabilizer (6) is retracted with respect to the associated tail part (3A, 3B) so as to generate limited drag, and **in that** each auxiliary stabilizer (6) is provided with rigidifying means (13).

2. The device as claimed in claim 1,
**characterized in that** it comprises at least two auxiliary stabilizers (6), each of which is associated with one of said tail parts (3A, 3B).

3. The device as claimed in one of claims 1 and 2,
**characterized in that**, in the deployed position (Pf), each auxiliary stabilizer (6) is brought into a plane substantially parallel to the corresponding local flow.

4. The device as claimed in one of claims 1 to 3,
**characterized in that** said actuating means (7) comprise, for each auxiliary stabilizer (6), a deployment system (12) which causes the auxiliary stabilizer (6) to move from the retracted position (Pi) to the deployed position (Pf).

5. The device as claimed in claim 4,
**characterized in that** said deployment system (12) performs a movement by pivoting, and **in that** said actuating means (7) comprise, for each auxiliary stabilizer (6), a hinge (10) which connects the auxiliary stabilizer (6) to the associated tail part (3A, 3B) and allows the auxiliary stabilizer (6) to pivot from the retracted position (Pi) to the deployed position (Pf).

6. The device as claimed in claim 5,
**characterized in that** said deployment system (12) causes pivoting toward the outside of the airplane.

7. The device as claimed in claim 5,
**characterized in that** said deployment system (12) causes pivoting toward the inside of the airplane.

8. The device as claimed in claim 4,
**characterized in that** said deployment system performs telescopic deployment.

9. The device as claimed in claim 4,
**characterized in that** said deployment system performs a deployment both translationally and in pivoting.

10. The device as claimed in any one of the preceding claims,
**characterized in that** said actuating means (7) additionally comprise, for each auxiliary stabilizer (6), a pin system (14) for locking the auxiliary stabilizer (6) in the deployed position (Pf).

11. The device as claimed in any one of the preceding claims,
**characterized in that** it additionally comprises at least one attachment means that allows said auxiliary stabilizer (6) to be kept in said retracted position (Pi).

12. The device as claimed in any one of claims 1 to 11,
**characterized in that** said rigidifying means comprise means for weighting the free end of the auxiliary stabilizer (6).

13. The device as claimed in any one of claims 1 to 11,
**characterized in that** said rigidifying means comprise a deployable stay (17), one end (18) of which is fixed to the auxiliary stabilizer (6) and the other end (19) of which is fixed to the associated tail part (3A, 3B).

14. The device as claimed in any one of the preceding claims,
**characterized in that** it additionally comprises, for each auxiliary stabilizer (6), a seal system (21) sealing the assembly formed by this auxiliary stabilizer (6) and the associated tail part (3A, 3B) when said auxiliary stabilizer (6) is in the retracted position (Pi).

15. The device as claimed in any one of the preceding claims,
**characterized in that**, in the retracted position (Pi), each auxiliary stabilizer (6) is housed in a box section (11) of the associated tail part (3A, 3B).

16. The device as claimed in any one of claims 1 to 15,
**characterized in that**, in the deployed position (Pf), each auxiliary stabilizer (6) is deployed toward the bottom of the associated tail part (3A, 3B).

17. The device as claimed in any one of claims 1 to 15,
**characterized in that**, in the deployed position, each auxiliary stabilizer is deployed toward the top of the associated tail part.

18. The device as claimed in any one of claims 1 to 15,
**characterized in that** it comprises at least one stabilizer which, in the deployed position, is deployed toward the top of the associated tail part and at least one stabilizer which, in the deployed position, is deployed toward the bottom of the associated tail part.

19. A method for laterally stabilizing an airplane equipped with a horizontal tail (2) comprising tail parts (3A, 3B) arranged on either side of the airplane, in which method the airplane is monitored so as to be able to detect conditions in which to activate lateral stabilization, and when said activation conditions are detected, at least one auxiliary stabilizer (6), provided with rigidifying means (13), which is associated with one of said tail parts (3A, 3B), is brought:
- from an inactive retracted position (Pi), in which said auxiliary stabilizer (6) is retracted with respect to the associated tail part (3A, 3B) so as to generate limited drag;
- into an active deployed position (Pf), in which said auxiliary stabilizer (6) is deployed with respect to the associated tail part (3A, 3B) so as to have a lateral stabilizing effect on the airplane.

20. The method as claimed in claim 19,
**characterized in that**, when said activation conditions are detected, at least two auxiliary stabilizers (6), each of which is associated with one of said tail parts (3A, 3B), are brought into the deployed position (Pf).

21. The method as claimed in one of claims 19 or 20, for laterally stabilizing an airplane comprising two propeller engines arranged at the rear of said airplane,
**characterized in that** said engines are monitored, and **in that** the conditions for activating stabilization correspond to simultaneous failures of said engines.
